# EUROPÄISCHE PATENTSCHRIFT

(11) **EP 3 199 010 B1**
(45) Veröffentlichungstag und Bekanntmachung des Hinweises auf die Patenterteilung: **19.09.2018**
(21) Anmeldenummer: 17150607.4
(22) Anmeldetag: 09.01.2017
(51) Int. Cl.: A01D 34/835

(54) **PFLANZENSTOPPELKREISELSCHLÄGER**
PLANT STUBBLE GYROSCOPIC BEATER
GYROBROYEUR DE CHAUME

(30) Priorität: 26.01.2016 DE 202016100346 U
(43) Veröffentlichungstag der Anmeldung: 02.08.2017
(73) Patentinhaber: Sommer, Johannes-Georg, 37434 Gieboldehausen (DE)
(72) Erfinder: Sommer, Johannes-Georg, 37434 Gieboldehausen (DE)
(74) Vertreter: REHBERG HÜPPE + PARTNER

(56) Entgegenhaltungen:
- CH-A- 361 688
- DE-A1- 1 507 389
- GB-A- 774 218
- NL-A- 7 014 267

## Beschreibung

### TECHNISCHES GEBIET DER ERFINDUNG

Die Erfindung betrifft eine Vorrichtung mit mindestens einem Pflanzenstoppelkreiselschläger zum Entfernen von Pflanzenstoppeln auf einem Feld.

Nach der Ernte von Mais, Raps, Getreide oder anderen Nutzpflanzen verbleiben deren Pflanzenstoppeln auf dem Feld. Diese Pflanzenstoppeln werden häufig von tierischen Schädlingen, insbesondere Maiszünslern und Maiswurzelbohrern, befallen und sollen daher entfernt werden.

### STAND DER TECHNIK

Eine Vorrichtung zum Abschneiden von Pflanzen auf einem Feld ist aus dem britischen Patent GB 774 218 bekannt. Die Vorrichtung weist ein Antriebselement und eine daran befestigte Kette auf. Das Antriebselement wird zum Bereitstellen einer Rotationsbewegung um eine vertikale Rotationsachse angetrieben. Am freien Ende der Kette ist ein Spike befestigt. Die Vorrichtung wird am Heck eines Traktors angeordnet und von einer vertikalen Zapfwelle des Traktors angetrieben.

Eine rotierend angetriebene Mähvorrichtung ist aus der internationalen Patentanmeldung WO 00/62593 A1 bekannt. Die Mähvorrichtung weist ein Gehäuse auf, in dem mehrere Schneidelemente rotierend angeordnet sind. Die Schneidelemente weisen jeweils ein Drahtseil mit einem an seinem freien Ende angeordneten harten Schneidelement auf. Die Schneidelemente ragen nur dann radial aus dem Gehäuse heraus, wenn sie angetrieben werden.

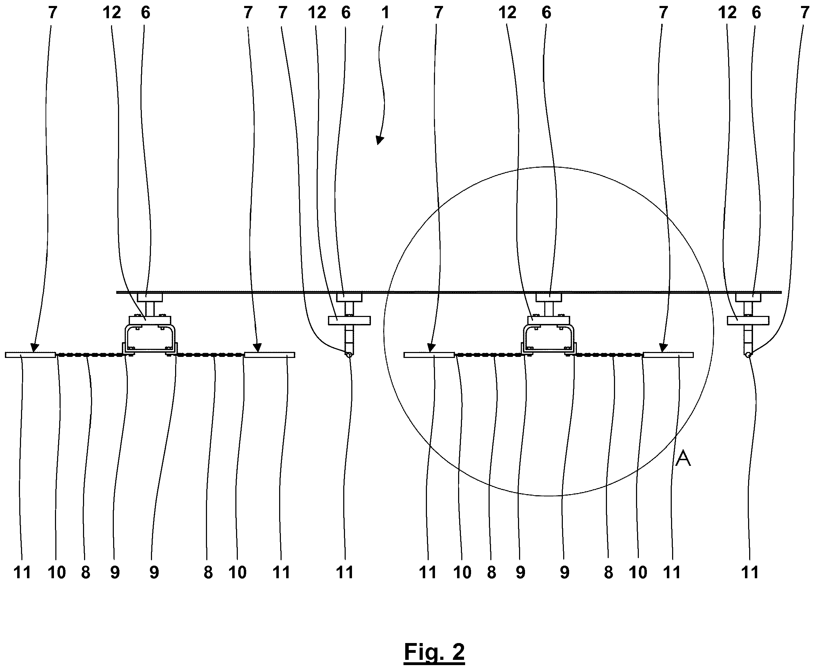

Eine Bodenbearbeitungsvorrichtung für ein Kartoffelfeld ist aus der niederländischen Patentanmeldung NL 7 014 267 bekannt. Die Vorrichtung weist zwölf beabstandet nebeneinander angeordnete Bearbeitungsorgane auf. An den zwei benachbarten Bearbeitungsorganen ganz links (siehe Fig. 2) wurden die Zinken entfernt. An dem dann folgenden dritten Bearbeitungsorgan sind an den Zinken jeweils zwei Ketten befestigt. Diese Anordnung setzt sich dann entsprechend fort. In dieser Weise bearbeiten die Zinken die Vertiefungen in dem Kartoffelfeld, während die Ketten die Dämme des Kartoffelfelds bearbeiten.

Eine Vorrichtung zum Abschneiden und Zerkleinern von Pflanzenstoppeln auf einem Feld ist aus der deutschen Patentanmeldung DE 10 2004 020 447 A1 bekannt. Die Vorrichtung kann in unterschiedlichen Ausführungsformen als Mäh-, Mulch-, Häcksel- oder Schlegeleinrichtung oder als Kombination dieser bekannten Einrichtungen ausgeführt sein. Sie kann um horizontale und/oder vertikale Achsen rotierende Schneid- und/oder Schlagmittel zur Zerkleinerung und/oder Zerfaserung der Erntegutreste aufweisen. Die Vorrichtung ist vor den Vorderrädern der Erntemaschine angeordnet, um die Stoppeln abschneiden zu können, bevor sie von den Rädern überfahren und dadurch heruntergedrückt werden und somit nicht abgeschnitten werden können.

Eine Vorrichtung zum Einebnen einer landwirtschaftlichen Nutzfläche ist aus dem deutschen Gebrauchsmuster DE 20 2012 007 158 U1 bekannt. Mit der Vorrichtung können auch Maisstoppeln aus Vorsorge gegen Maiszünsler zerkleinert werden. Allgemein beschrieben ist auch ein Anbauwerkzeug für die temporäre Befestigung an einer Kreiselegge.

### AUFGABE DER ERFINDUNG

Der Erfindung liegt die Aufgabe zugrunde, eine maschinenangetriebene Vorrichtung zum mechanischen Entfernen von Pflanzenstoppeln auf einem Feld bereitzustellen, die gewährleistet, dass die Pflanzenstoppeln so entfernt werden, dass tierischen Schädlingen kein brauchbarer Lebensraum mehr geboten wird.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### WEITERER STAND DER TECHNIK

Eine weitere Vorrichtung zum Zerstören von Pflanzenstoppeln auf einem Feld ist aus der deutschen Patentanmeldung DE 10 2007 043 326 A1 bekannt. Die Vorrichtung führt eine thermische Nachbehandlung der Pflanzenstoppeln mit einem heißen oder sehr kalten Medium durch.

Ein Mulchgerät für die Kompostierung zu verarbeitender organischer Abfälle ist aus dem deutschen Gebrauchsmuster DE G 84 19 526 bekannt. Die Vorrichtung dient zur Weiterverarbeitung der bereits abgetrennten Pflanzenbestandteile. Dafür besitzt sie einen als stumpfkantigen Schlaghammer ausgebildeten Schlegelkörper. Eine Mehrzahl derartiger Schlaghämmer ist am Umfang einer Mulchtrommel frei drehbar angeordnet und dient dazu, die zu zerkleinernden Abfälle nicht zu zerschneiden, sondern zu zerschlagen.

Eine Vorrichtung zum Entfernen von Unkraut ist aus dem britischen Patent GB 1 211 250 bekannt. Die Vorrichtung weist eine Mehrzahl von Schneideinrichtungen auf, die jeweils eine sich vertikal erstreckende Antriebswelle aufweisen. An der Antriebswelle sind drei kurze Ketten gleichmäßig beabstandet befestigt. Die Ketten bilden die Schneidelemente der Vorrichtung.

### BESCHREIBUNG DER ERFINDUNG

Die Erfindung betrifft einen Pflanzenstoppelkreiselschläger zum Zerstören von Pflanzenstoppeln auf einem Feld. Der Kreiselschläger weist ein nicht biegesteifes Kopplungselement mit einem ersten Ende und einem zweiten Ende auf. Das erste Ende ist mit einem Antriebselement zum Bereitstellen einer Rotationsbewegung um eine vertikale Rotationsachse verbindbar. Der Kreiselschläger weist weiterhin ein Schlagelement auf, das an dem zweiten Ende des Kopplungselements befestigt ist.

Die Erfindung betrifft weiterhin eine Vorrichtung zum Zerstören von Pflanzenstoppeln auf einem Feld mit einem Antriebselement, das zum Bereitstellen einer Rotationsbewegung um eine vertikale Rotationsachse angetrieben ist. Die Vorrichtung weist einen Pflanzenstoppelkreiselschläger mit einem nicht biegesteifen Kopplungselement mit einem ersten Ende und einem zweiten Ende und ein Schlagelement auf, wobei das erste Ende mit dem Antriebselement und das zweite Ende mit dem Schlagelement verbunden ist.

Die Pflanzenstoppeln können insbesondere Maisstoppeln, Rapsstoppeln oder Getreidestoppeln sein. Die nach der Ernte auf dem Feld verbleibenden Pflanzenstoppel werden häufig von tierischen Schädlingen, insbesondere Maiszünslern oder Maiswurzelbohrern, befallen. Der Maiszünsler legt seine Eier in der Maispflanze oder auch auf den Blättern der Maispflanze ab. Die daraus entstehenden Maden wandern im Maisstängel nach unten, um im unteren Teil der Maispflanze zu überwintern und diese als Falter im kommenden Frühjahr wieder zu verlassen. Anschließend beginnt der Zyklus von Neuem. Ergebnis dieses Schädlingsbefalls sind eine verringerte Erntequalität und Erntequantität.

Dieses Problem löst die Erfindung durch eine neue Art der Bekämpfung der tierischen Schädlinge mittels einer maschinenangetriebenen Vorrichtung, die die Pflanzenstoppeln nicht nur teilweise mechanisch entfernt, sondern wirksam mechanisch zerstört. Durch das schlagartige Zerplatzen der Pflanzenstoppel wird den tierischen Schädlingen der Lebensraum entzogen. Teilweise werden diese auch direkt getötet. Die zerkleinerten Reste der Pflanzenstoppel können von Regenwürmern in die Erde gezogen werden und dort schnell verrotten.

Der neue Pflanzenstoppelkreiselschläger weist zwei Funktionen auf, die in besonderer Weise miteinander kombiniert sind. Die erste Funktion besteht darin, dass der Kreiselschläger ein vergleichsweise stumpfes Schlagelement aufweist, das die zu zerstörenden Pflanzenstoppeln nicht mit einer Schneide abschneidet oder abmäht, sondern hochenergetisch zerschlägt. Dieses Zerschlagen beruht einerseits auf dem Fehlen von Schneidkanten und der block- oder stangenartigen Gestalt des Schlagelements und andererseits auf der hohen kinetischen Energie, die das Schlagelement aufgrund seiner schnell rotierenden Bewegung und seiner vergleichsweise großen Masse besitzt.

All dies führt dazu, dass die Pflanzenstoppeln beim Auftreffen des Schlagelements schlagartig zerplatzen und quasi explodieren. Der Kontaktbereich zwischen Schlagelement und Stoppeln und die in beiden Richtungen an diesen angrenzenden Bereiche der Stoppeln zerfasern also und werden zerstört, während bei einem schneidenden Verfahren des Stands der Technik ein Teil des Pflanzenstoppels abgeschnitten wird und der Pflanzenstoppel ansonsten unversehrt bleibt. Durch das neue weitgehende Zerfasern des Pflanzenstoppels gemäß der Erfindung wird dem Maiszünsler effektiv dessen notwendiger Lebensraum entzogen.

Die zweite zugrundeliegende Funktion besteht in der Ausbildung des Kopplungselements als ein nicht biegesteifes Element. Dies führt dazu, dass sich das mittels des Kopplungselements an dem rotierenden Antriebselement befestigte Schlagelement - mit Ausnahme der begrenzten radialen Entfernung von dem Antriebselement - frei relativ zu dem Antriebselement bewegen kann. Wenn das Schlagelement auf ein Hindernis trifft, das einen vergleichsweise großen Widerstand bietet, kann das Schlagelement somit dem Hindernis ausweichen, ohne dass es zu einer Beschädigung des Kreiselschlägers oder dessen Antriebs kommt. Somit stellen auch durchaus gewollte Kontakte mit dem Boden kein Problem für den neuen Kreiselschläger dar. Hierdurch ist es möglich, mit dem Kreiselschläger auch obere Bereiche des Bodens bzw. der Erde zu bearbeiten, so dass auch unter der Oberfläche liegende Teile der Pflanzen inklusive der Wurzeln mit dem Kreiselschläger zerstört werden können. Eine solche Bearbeitung ist mit einem schneidenden Werkzeug nicht möglich.

Die durch den rotierenden Antrieb des Antriebselements durch einen Motorantrieb auf den Pflanzenstoppelkreiseschläger wirkende Fliehkraft führt dazu, dass sich dieser nach außen bewegt und die gestreckte radiale Position einnimmt. Die Umfangsgeschwindigkeit des Schlagelements kann über die Drehzahl und die Länge des Kreiselschlägers variiert werden. Dabei werden insbesondere Drehzahlen von mindestens 300 1/min, insbesondere zwischen 500 und 800 1/min verwendet. Die Aufprallgeschwindigkeit kann je nach Stoppelart und Stoppelzustand zwischen etwa 20 und 80 m/s, insbesondere zwischen etwa 25 und 60 m/s, insbesondere zwischen etwa 40 und 60 m/s, betragen. Es handelt sich also um eine motorangeriebene und nicht um eine handangetriebene Vorrichtung.

Das Schlagelement des Kreiselschlägers kann als Stange, insbesondere als Metallstange, ausgebildet sein. Es kann sich auch um einen Klotz, Block, Quader, Flacheisen, Flachstahl oder ein anderes geeignetes Schlagelement handeln, das die hochenergetische und stumpf wirkende Zerstörungsleistung erbringt. Der Querschnitt des Schlagelements kann insbesondere rund, oval, rechteckig oder dreieckig sein. Bei dem Material kann es sich insbesondere um einen geeigneten Stahlwerkstoff handeln.

Das Schlagelement kann eine Masse von mindestens 1 kg, insbesondere mindestens 2 kg, insbesondere zwischen 1 kg und 8 kg, insbesondere von etwa 2 kg besitzen, und/oder eine Länge von mindestens 200 mm, insbesondere von mindestens 300 mm, insbesondere von mindestens 400 mm, insbesondere zwischen 300 mm und 1200 mm, insbesondere zwischen 400 mm und 600 mm, insbesondere von etwa 500 mm, besitzen, und/oder eine Dicke von zwischen 20 mm und 50 mm, insbesondere von etwa 30 mm, besitzen. In dieser Weise wird die hochenergetische zerschlagende Funktionsweise erreicht, wenn der Kreiselschläger mit einer entsprechend hohen Drehzahl rotierend angetrieben wird. Eine solche Drehzahl kann insbesondere mindestens 300 1/min, insbesondere mindestens 500 1/min, insbesondere zwischen 500 und 800 1/min, insbesondere etwa 600 1/min, betragen.

Das Kopplungselement kann insbesondere eine Länge von mindestens 100 mm, insbesondere von mindestens 200 mm, insbesondere von mindestens 400 mm, insbesondere zwischen 300 mm und 1200 mm, insbesondere zwischen 400 mm und 600 mm, insbesondere von etwa 500 mm, besitzen, und/oder eine Dicke von zwischen 6 mm und 20 mm, insbesondere zwischen 10 mm und 15 mm, insbesondere von etwa 13 mm, besitzen.

Die Gesamtdimensionierung der Massen und der Abmaße der Elemente des Kreiselschlägers und der vom Antrieb bereitgestellten Drehzahl kann insbesondere so gewählt sein, dass die auf den Pflanzenstoppel einwirkende theoretische Aufschlagskraft mindestens 30.000 N, insbesondere mindestens 50.000 N, insbesondere mindestens 60.000 N, insbesondere zwischen 30.000 N und 100.000 N, insbesondere zwischen 60.000 N und 70.000 N, insbesondere etwa 65.000 N beträgt.

An jedem Antriebselement der Vorrichtung können ein, zwei, drei, vier oder mehr Kreiselschläger angeordnet sein. Bevorzugt ist aber eine Anordnung von genau zwei Kreiselschlägern. Diese sind dann vorzugsweise um etwa 180° versetzt an dem Antriebselement angeordnet, wodurch sich die Kräfte bzw. Momente teilweise aufheben und der gewünschte Rundlauf des Antriebselements erreicht wird.

Die Vorrichtung weist eine Mehrzahl beabstandet nebeneinander angeordneter Antriebselemente mit jeweils daran befestigtem Kreiselschläger auf. Jeder der Kreiselschläger weist eine kreisringförmige Arbeitsfläche auf, die der rotatorischen Bewegung des Schlagelements entspricht. Mehrere dieser kreisringförmigen Arbeitsflächen werden nun so miteinander kombiniert, dass sich eine Gesamtarbeitsfläche ergibt und die Vorrichtung die gewünschte Gesamtarbeitsbreite realisiert.

Die Antriebselemente sind also so angeordnet, dass sich die Kreiselschläger nicht gegenseitig berühren oder behindern, sie aber über die Gesamtarbeitsbreite wirksam sind, so dass die Pflanzenstoppeln über die Gesamtarbeitsbreite zerstört werden. Dies wird durch eine senkrecht zur Fahrtrichtung überlappende Anordnung der Einzelarbeitsflächen erreicht. Diese ist entweder durch ein zusätzlich in Fahrtrichtung versetztes Anordnen der Antriebselemente oder durch eine geschickte Synchronisierung der Winkelstellungen und Drehrichtungen der Antriebselemente möglich. Die Antriebselemente werden insbesondere mit übereinstimmenden Drehzahlen abwechselnd in entgegengesetzten Drehrichtungen angetrieben.

Die Vorrichtung ist eine Kreiselegge mit einem Zinkenhalter ohne Zinken oder mit gekürzten Zinken. Dabei können zwei Kreiselschläger mit ihrem jeweiligen Kopplungselement an dem Zinkenhalter oder den gekürzten Zinken befestigt sein. Es wäre auch möglich, nur einen Kreiselschläger oder mehr Kreiselschläger, z. B. drei oder vier Kreiselschläger, an dem Zinkenhalter oder den gekürzten Zinken zu befestigen. In dieser Weise kann eine bei Landwirten häufig vorhandene Kreiselegge dazu genutzt werden, um den neuen Kreiselschläger ohne großen apparativen Aufwand und Kosten einzusetzen und damit das neue Zerstörungsverfahren durchzuführen. Bevorzugt ist dabei eine bleibende Umrüstung der Kreiselegge. Es ist aber auch möglich, nur eine vorübergehende Umrüstung der Kreiselegge vorzunehmen, so dass diese für ihre Primärfunktion nutzbar bleibt. In diesem Fall würden die Zinken nicht gekürzt werden.

Die Vorrichtung kann eine Aufnahme für eine Befestigung der Vorrichtung am Heck eines Traktors aufweisen, wobei das Antriebselement durch die hintere Zapfwelle des Traktors angetrieben wird. Dies ist sowohl bei der Nutzung einer Kreiselegge als auch eines anderen geeigneten bekannten Anbauteils eines Traktors oder auch eines speziell dafür bestimmten und konstruierten Anbauteils zum Zerstören von Pflanzenstoppeln möglich. Die Zapfwelle des Traktors stellt einen geeigneten Antrieb bereit, ohne dass diesbezügliche Umbaumaßnahmen am Traktor erforderlich sind.

Die Vorrichtung kann ein mittels eines Trägers mit einem anderen Teil der Vorrichtung verbundenes Laufrad aufweisen, das sich auf dem Boden abstützt und über das die Vorrichtung relativ zum Boden geführt wird. Das Laufrad kann dabei insbesondere am in Fahrtrichtung hinteren Ende der Vorrichtung angeordnet sein und dabei den hinteren Abschluss der Vorrichtung bilden. Es kann ein mittig angeordnetes Laufrad oder auch mehrere, insbesondere zwei, außermittig angeordnete Laufräder verwendet werden. Die Laufräder können auch im Sinne von Zwillingsrädern als Paare angeordnet sein. Anstelle von Laufrädern können auch Walzen oder andere geeignete Roll- oder Gleitelemente verwendet werden.

Die Vorrichtung kann eine Höheneinstelleinrichtung zum Einstellen des Abstands des Kreiselschlägers vom Boden aufweisen. Somit lässt sich die Ausrichtung der Vorrichtung an die jeweiligen Bodenverhältnisse anpassen. Zudem kann eingestellt werden, inwieweit eine Bearbeitung in den Boden hinein erfolgen soll, um dort vorhandene Bestandteile der Pflanzenstoppeln - und auch deren Wurzeln - zerstörend zu bearbeiten.

Zusätzlich kann der Abstand des Kreiselschlägers vom Boden mittels der vorhandenen Höheneinstelleinrichtung des Traktors eingestellt werden. Es handelt sich dabei um die hydraulische Höheneinstelleinrichtung für die Unterlenker des Traktors. In Verbindung mit den Laufrädern ergibt sich somit ein einstellbares Tandemfahrweck.

Die Höheneinstelleinrichtung kann so ausgebildet sein, dass die Position des Trägers relativ zu dem anderen Teil der Vorrichtung einstellbar ist. Aus dieser Veränderung ergibt sich gleichzeitig eine höhenmäßige Veränderung der Lage der rotierenden Kreiselschläger relativ zum Boden. Die Höheneinstelleinrichtung kann dafür z. B. eine Mehrzahl von Befestigungsöffnungen aufweisen, von denen selektiv eine durch ein Befestigungsmittel mit dem Träger verbunden wird.

Neben der Anordnung der Vorrichtung hinter dem Heck eines Traktors sind aber auch eine Anordnung vor der Front eines Traktors, eines Maishäckslers, eines Mähdreschers oder einer anderen Arbeitsmaschine oder eine Anordnung an einer Seite oder an beiden Seiten eines Traktors, eines Maishäckslers, eines Mähdreschers oder einer anderen Arbeitsmaschine möglich.

Eine bevorzugte Anordnung der Vorrichtung stellt die an bzw. vor der Front eines selbstfahrenden Maishäckslers oder Mähdreschers dar. Hierfür weist die Vorrichtung eine Aufnahme für die Befestigung an der Front des Maishäckslers oder Mähdreschers hinter dem Schneidwerk des Maishäckslers oder Mähdreschers auf. Bei dem Schneidwerk kann es sich insbesondere bei einem Maishäcksler um einen Maisgebiss und bei einem Mähdrescher um einen Maispflücker handeln. In dieser Weise können in nur einer Arbeitsfahrt die Ernteeinholung und die Stoppelzerstörung durchgeführt werden.

Eine solche Vorrichtung kann einen separaten Antrieb, insbesondere einen Hydraulikmotor, zum Antreiben des Antriebselements aufweisen. Unter einem separaten Antrieb ist dabei ein Antrieb zu verstehen, der nicht ohnehin Teil der Arbeitsmaschine ist.

Dabei kann jedes Antriebselement einen eigenen Antrieb aufweisen. Es ist aber auch möglich, dass alle Antriebselemente der Vorrichtung einen gemeinsamen Antrieb aufweisen. In diesem Fall ist die gewünschte gleichbleibende Synchronisierung der Drehbewegungen der Kreiselschläger vereinfacht.

Die Vorrichtung kann einen Gleitteller aufweisen, der sich auf dem Boden abstützt und über den die Vorrichtung relativ zum Boden geführt wird. Dieser Gleitteller erfüllt also die zuvor beschriebene Funktion des Laufrads. Die Vorrichtung kann eine Höheneinstelleinrichtung zum Einstellen des Abstands des Kreiselschlägers vom Boden aufweisen. Diese kann insbesondere eine oder mehrere austauschbare Distanzscheiben aufweisen. Durch die Variation der Dicke und/oder der Anzahl von Distanzscheiben kann somit der Abstand der rotierenden Kreiselschläger vom Boden in der gewünschten Weise eingestellt werden.

Die Antriebselemente können so beabstandet und die Längen der Kreiselschläger so bemessen sein, dass sich die kreisringförmigen Arbeitsbereiche der an benachbarten Antriebselementen angeordneten Kreiselschläger überlagern. Die Kreiselschläger an benachbarten Antriebselementen können so winkelversetzt angeordnet sein und angetrieben werden, dass sie sich nicht gegenseitig berühren. In dieser Weise wird die Wirksamkeit der Vorrichtung über ihre Gesamtarbeitsbreite verlässlich sichergestellt.

Dabei können die Kreiselschläger an benachbarten Antriebselementen insbesondere um etwa 90° versetzt angeordnet sein. Bei einer Anordnung von zwei um 180° versetzt angeordneten Kreiselschlägern pro Antriebselement ergibt sich somit eine um 90° versetzte Anordnung bei Betrachtung von zwei benachbarten Antriebselementen, so dass der maximal verfügbare Freiraum genutzt und somit sichergestellt wird, dass keine Kollision der Schlagelemente der Kreiselschläger auftritt.

Diese überlappende Anordnung findet bei einem gemeinsamen Antrieb der mehreren Antriebselemente Anwendung, sofern der Antrieb verlässlich die synchrone Bewegung der Antriebselemente garantiert und somit Kollisionen der Kreiselschläger ausschließt. Bei separaten Antrieben werden die Antriebselemente und die Kreiselschläger hingegen so dimensioniert und angeordnet, dass sich die Arbeitsbereiche nicht überlappen. Für eine lückenlose Zerstörung aller Pflanzenstoppel werden bei der Dimensionierung und Anordnung die zwischen den Pflanzenstoppelreihen vorhandenen Abstände berücksichtigt.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüche aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Kopplungselement die Rede ist, ist dies so zu verstehen, dass genau ein Kopplungselement, zwei Kopplungselemente oder mehr Kopplungselemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Seitenansicht des hinteren Teils eines Traktors mit einer ersten beispielhaften Ausführungsform einer neuen Vorrichtung zum Zerstören von Pflanzenstoppeln auf einem Feld.
- **Fig. 2**: zeigt eine Seitenansicht eines Teils der neuen Vorrichtung gemäß Fig. 1.
- **Fig. 3**: zeigt das Detail A aus Fig. 2.
- **Fig. 4**: zeigt eine Draufsicht auf einen Teil der Vorrichtung gemäß Fig. 1.
- **Fig. 5**: zeigt eine Seitenansicht eines Maishäckslers mit einer nur symbolisch dargestellten zweiten beispielhaften Ausführungsform der neuen Vorrichtung.
- **Fig. 6**: zeigt eine perspektivische Ansicht eines Teils der Vorrichtung gemäß Fig. 5.
- **Fig. 7**: zeigt eine erste Seitenansicht der Vorrichtung gemäß Fig. 6.
- **Fig. 8**: zeigt eine zweite Seitenansicht der Vorrichtung gemäß Fig. 6.
- **Fig. 9**: zeigt eine dritte Seitenansicht der Vorrichtung gemäß Fig. 6.
- **Fig. 10**: zeigt eine Ansicht von oben auf die Vorrichtung gemäß Fig. 6.

### FIGURENBESCHREIBUNG

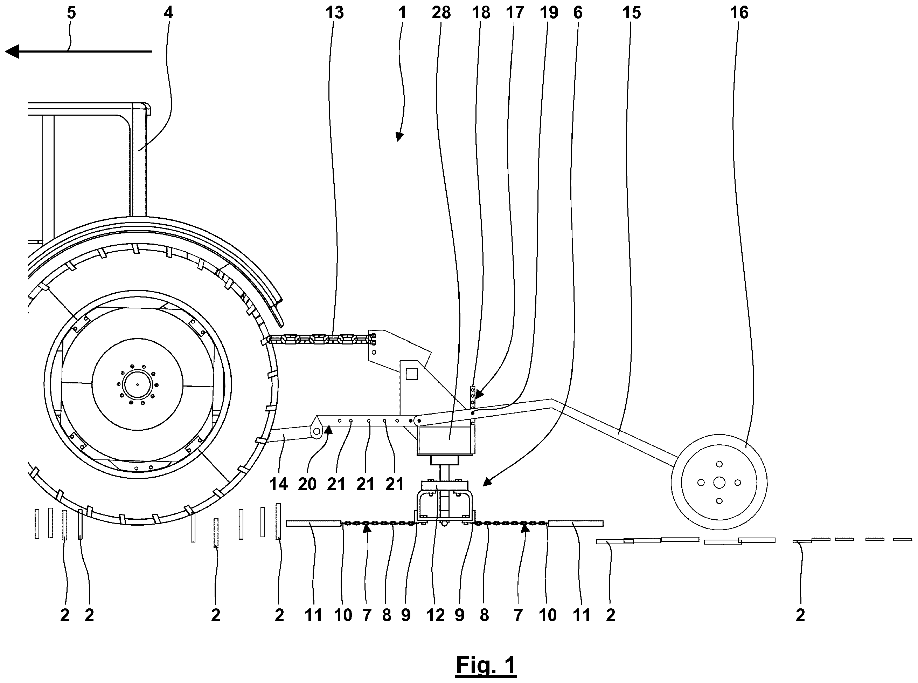

Die **Fig. 1-4** zeigen verschiedene Ansichten einer ersten beispielhaften Ausführungsform einer neuen Pflanzenstoppelzerstörungsvorrichtung 1 zum Zerstören von nach der Ernte auf einem Feld 3 zurückgebliebenen Pflanzenstoppeln 2.

In diesem Fall handelt es sich bei der Vorrichtung 1 um eine Anbauvorrichtung für einen Traktor 4 (nur teilweise dargestellt). Die Vorrichtung 1 ist am Heck des Traktors 4 befestigt, wie dies weiter unterhalb beschrieben wird. Der Traktor 4 bewegt sich in der Fahrtrichtung 5 über das Feld 3. Die Fahrtrichtung 5 entspricht dabei gleichzeitig der Arbeitsrichtung der Vorrichtung 1.

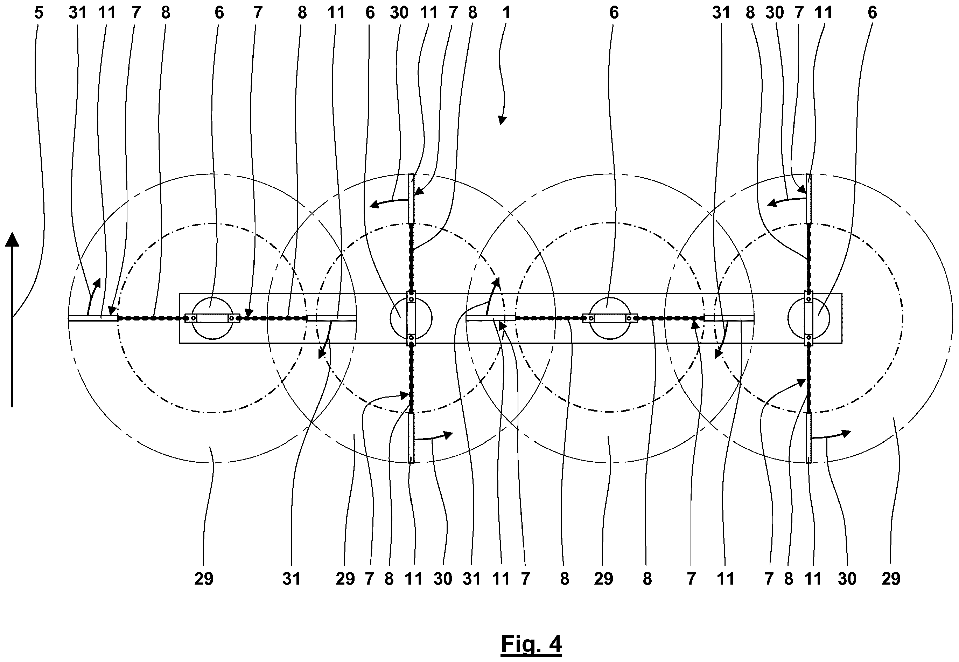

Die Vorrichtung 1 weist ein Antriebselement 6 auf, das zum Bereitstellen einer Rotationsbewegung um eine vertikale Rotationsachse angetrieben ist. Wie in Fig. 2 und 4 erkennbar ist, weist die Vorrichtung 1 eine Mehrzahl beabstandet nebeneinander angeordneter Antriebselemente 6 auf, die abwechselnd in unterschiedlichen Drehrichtungen 30 und 31 angetrieben werden. Die Drehrichtung 30 entspricht hier dem Uhrzeigersinn und die Drehrichtung 31 dem Gegenuhrzeigersinn. Dies könnte aber auch genau umgekehrt sein.

An jedem der Antriebselemente ist ein Pflanzenstoppelkreiselschläger 7 angeordnet. Im dargestellten Beispiel sind an jedem Antriebselement 6 zwei Pflanzenstoppelkreiselschläger 7 um etwa 180° versetzt angeordnet.

Jeder Pflanzenstoppelkreiselschläger 7 weist ein nicht biegesteifes Kopplungselement 8 mit einem ersten Ende 9 und einem zweiten Ende 10 auf. Im vorliegenden Fall handelt es sich bei dem nicht biegesteifen Kopplungselement 8 um eine Metallkette. Es könnte sich aber auch um ein Seil, einen Draht oder ein anderes geeignetes nicht biegesteifes Kopplungselement 8 handeln.

Das erste Ende 9 des Kopplungselements 8 ist mit dem Antriebselement 6 verbunden. In diesem Fall ist das als Kette ausgebildete Kopplungselement 8 mit einem Profil, insbesondere durch Schweißen, und dieses Profil mittels einer Schraubverbindung mit dem Antriebselement 6 verbunden. Andere Verbindungsarten sind aber ebenfalls möglich. Der Pflanzenstoppelkreiselschläger 7 weist weiterhin ein Schlagelement 11 auf, das mit dem zweiten Ende 10 des Kopplungselements 8 fest verbunden ist.

Im vorliegenden Beispiel ist die Vorrichtung 1 als Kreiselegge 28 mit einer Mehrzahl von Zinkenhaltern 12 ausgebildet, deren Zinken entfernt wurden. An jedem Zinkenhalter 12 wurden dann mittels Profilen und Schraubverbindungen jeweils zwei Pflanzenstoppelkreiselschläger 7 befestigt.

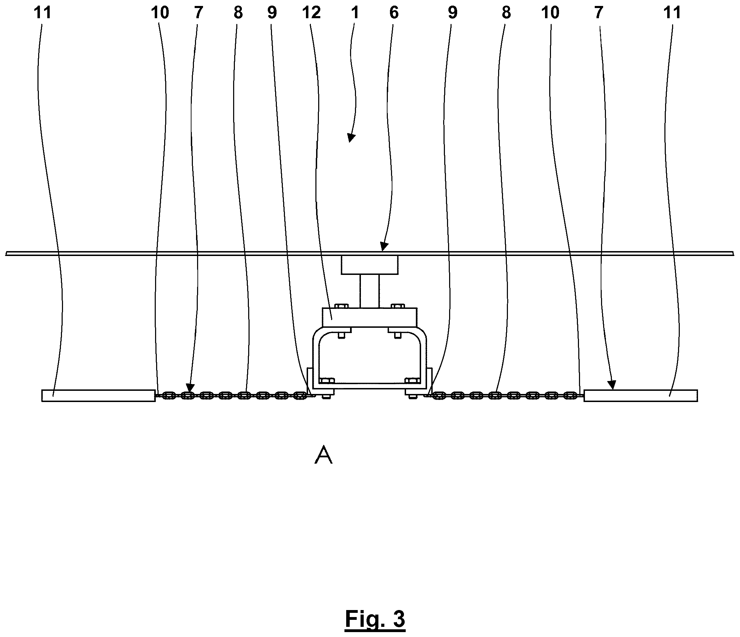

Bei einer Rotation des Antriebselements 6 mit einer entsprechend großen Drehzahl ergibt sich dann aufgrund der Fliehkraft die beispielsweise in Fig. 3 gut erkennbar dargestellte Ausrichtung der Pflanzenstoppelkreiselschläger 7. In dieser Ausrichtung treffen diese mit den Schlagelementen 11 auf die Stoppel 2 und zerschlagen diese aufgrund ihrer hohen kinetischen Energie explosionsartig. Die daraus resultierenden zerstörten Stoppelreste 2 sind im rechten Bereich von Fig. 1 schematisch dargestellt. Aufgrund der fehlenden Biegesteifigkeit der Kopplungselemente 8 können die Kreiselschläger 7 keine Querkräfte übertragen und daher eine Ausweichbewegung machen, wenn sie auf entsprechende Hindernisse treffen. Dadurch kommt es zu keiner Beschädigung der Vorrichtung 1 beim Treffen auf derartige Hindernisse.

Wie insbesondere in Fig. 4 und auch in Fig. 2 gut erkennbar ist, weist jede Einheit aus einem Antriebselement 6 und daran angeordneten Kreiselschlägern 7 einen kreisringförmigen Arbeitsbereich 29 auf. Bei der Bestimmung des Arbeitsbereichs 29 ist aber auch zu berücksichtigen, dass sich die Vorrichtung 1 in der Fahrtrichtung 5 bewegt und somit in einem wesentlichen Teil des Arbeitsbereichs 29 die Stoppeln 2 bereits zerstört wurden. Wirksam ist also nur der Teil des Arbeitsbereichs, in dem die Kopplungselement 8 erstmals über das Feld 3 bewegt werden.

Die Längen der Pflanzenstoppelkreiselschläger 7 und die Abstände zwischen den Antriebselementen 6 sind so aufeinander abgestimmt, dass sich die kreisringförmigen Arbeitsbereiche 29 überlappen. Dies würde normalerweise zu einer Kollision der Schlagelemente 11 führen und wäre somit nicht funktionsfähig. Dies wird aber dadurch verhindert, dass die Pflanzenstoppelkreiselschläger 7 an benachbarten Antriebselementen 6 um 90° versetzt angeordnet sind und so abwechselnd in entgegengesetzten Drehrichtungen 30, 31 angetrieben werden, dass sie sich nicht gegenseitig berühren. Die in Fig. 4 in einer beispielhaften Stellung gezeigte winkelmäßige Relativanordnung bleibt also über die gesamte Drehung der Antriebselemente 6 und somit der Pflanzenstoppelkreiselschläger 7 um 360° (und weiter) erhalten.

In Fig. 1 sind weitere Details der Vorrichtung 1 dargestellt. Die Vorrichtung 1 ist mittels des Oberlenkers 13 und der zwei Unterlenker 14 am Heck des Traktors 4 befestigt. Für diese Verbindung weist die Vorrichtung 1 mehrere Verbindungsteile und Schwenklager auf. Die Vorrichtung 1 weist weiterhin einen Träger 15 auf, an dessen vom Traktor 4 abgewandten Ende ein Laufrad 16 drehbar angeordnet ist. Die oberhalb bereits erwähnten zwei Unterlenker 14 sind gleichmäßig beabstandet zur Längsmittelachse des Traktors 4 angeordnet, so dass in der Ansicht der Fig. 1 der zweite Unterlenker 14 verdeckt wird und daher nicht sichtbar ist. Entsprechendes gilt für den zweiten Träger 15 und das zweite Laufrad 16. Es versteht sich also, dass auch diese Teile jeweils doppelt vorhanden sind. Die Laufräder 16 können aber auch als Zwillingsräder ausgebildet sein, so dass die Vorrichtung 1 zwei Laufräder 16 links und zwei Laufräder 16 rechts aufweist. Der Antrieb der Vorrichtung 1 erfolgt über die in dieser Ansicht ebenfalls nicht sichtbare hintere Zapfwelle des Traktors 4.

Die Vorrichtung 1 weist weiterhin eine Höheneinstelleinrichtung 17 zum Einstellen des Abstands des Pflanzenstoppelkreiselschlägers 7 vom Boden auf. Die Höheneinstelleinrichtung 17 ist so ausgerichtet, dass die Position des Trägers 15 relativ zu dem anderen Teil der Vorrichtung 1 einstellbar ist. Dafür weist die Einstelleinrichtung 17 in diesem Beispiel eine Mehrzahl beabstandeter und in vertikaler Richtung übereinander angeordneter Bohrungen 18 auf, in die wahlweise ein Bolzen 19 des Trägers 15 oder ein anderes Verbindungsmittel eingesetzt werden kann. Somit ändern sich der Winkel und die Höhenlage des Trägers 15. Da dieser aber dem Schwerkrafteinfluss folgt und erst durch das Laufrad 16 auf dem Boden des Felds 3 abgestützt wird, wird hierdurch im Ergebnis die Höhenlage der Pflanzenstoppelkreiselschläger 7 eingestellt. Wenn der Träger 15 also beispielsweise mit seinem Bolzen 19 mit einer darüberliegenden Bohrung 18 verbunden wir, werden die Pflanzenstoppelkreiselschläger 7 abgesenkt.

Die Vorrichtung 1 weist weiterhin eine Abstandseinstelleinrichtung 20 auf, mittels der der Abstand der Vorrichtung 1 vom Heck des Traktors 4 einstellbar ist. Auch diese Abstandseinstelleinrichtung 20 weist hierfür eine Mehrzahl von Bohrungen 21 auf, die wahlweise mit einem Verbindungsmittel verbunden werden können.

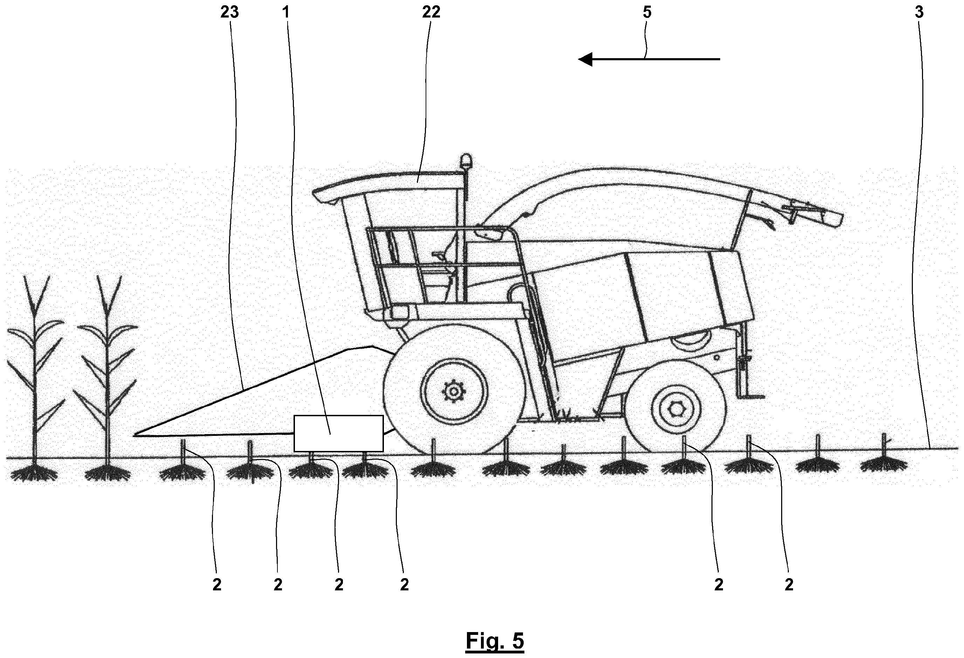

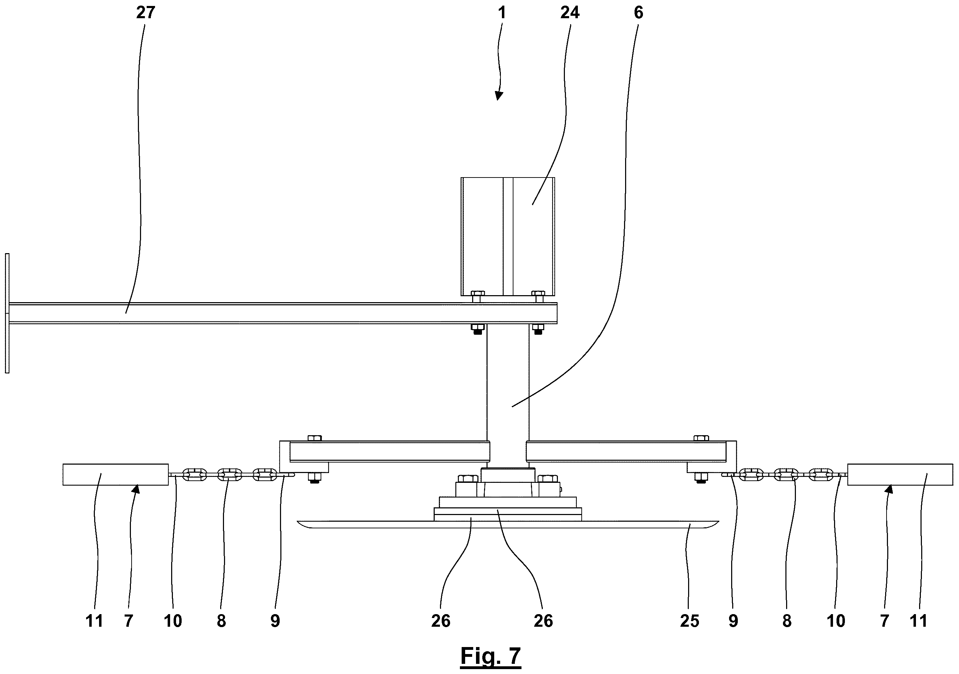

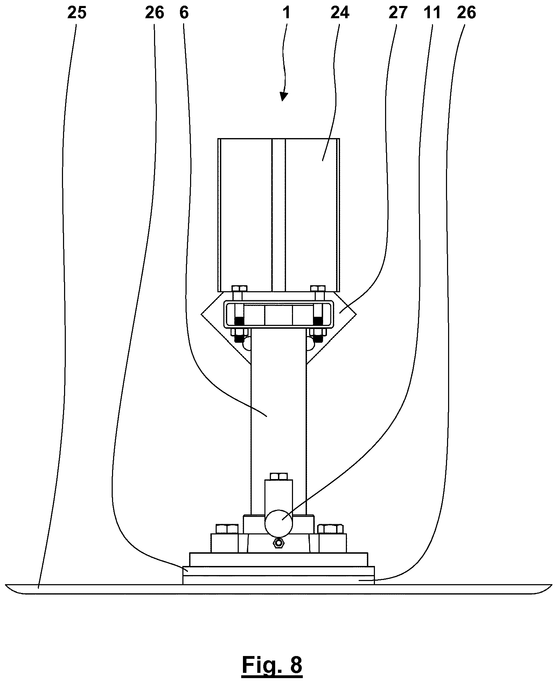

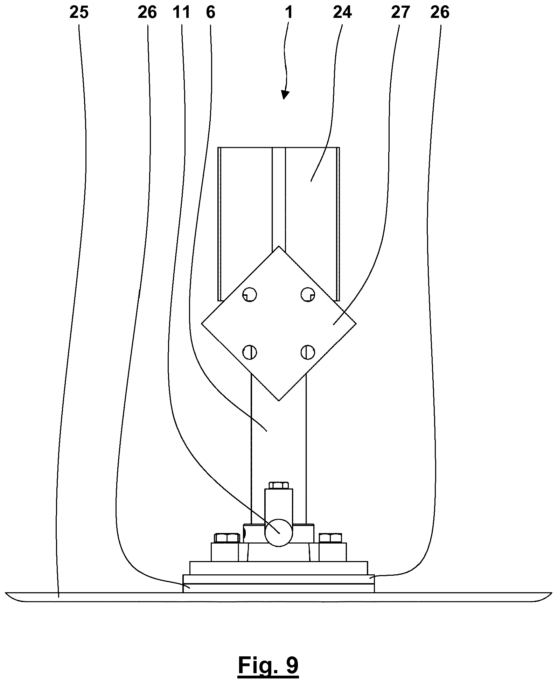

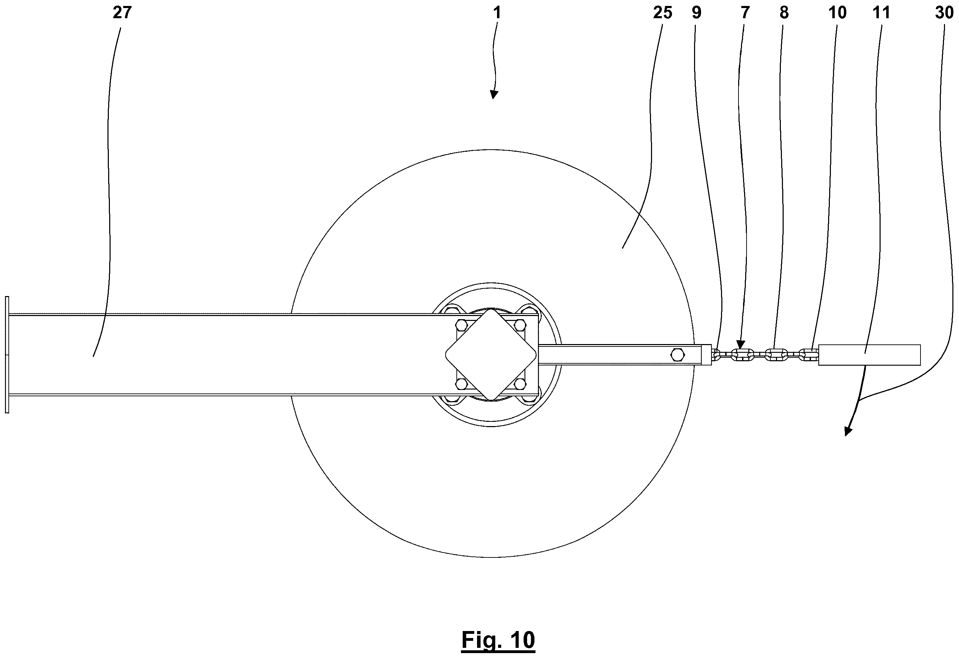

Die **Fig. 5-10** zeigen verschiedene Ansichten einer zweiten beispielhaften Ausführungsform der neuen Pflanzenstoppelzerstörungsvorrichtung 1 zum Zerstören von Pflanzenstoppeln 2 auf einem Feld 3.

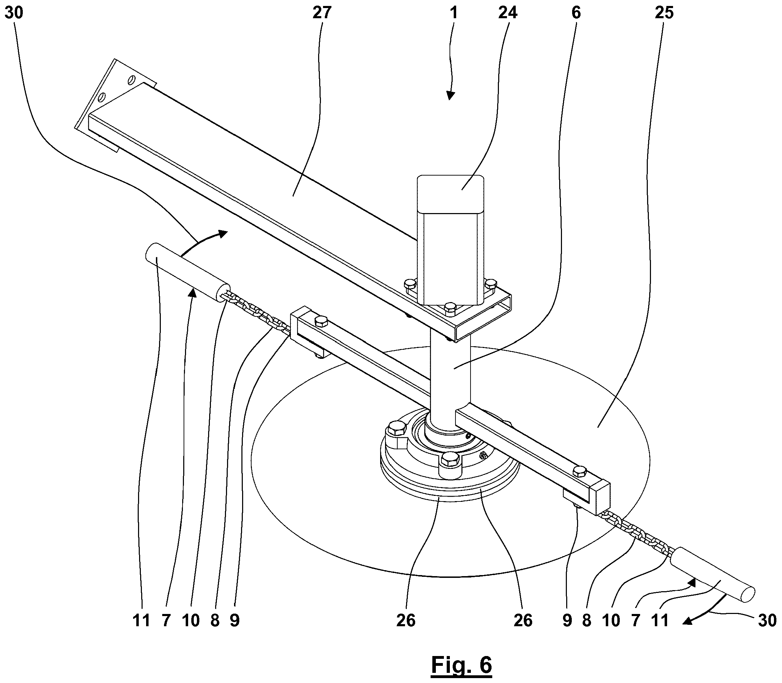

In diesem Fall handelt es sich bei der Vorrichtung 1 um eine Anbauvorrichtung für einen Maishäcksler 22. Die Vorrichtung 1 ist an der Front des Maishäckslers 22 an und hinter dessen als Maisgebiss ausgebildeten Schneidwerk 23 angeordnet. In Fig. 5 ist die Vorrichtung 1 wegen der ungünstigen Größenverhältnisse lediglich symbolisch als Kasten dargestellt. Die technischen Details der Vorrichtung 1 sind in den Fig. 6-10 erkennbar.

Die Vorrichtung 1 ist über einen Träger 27 mit dem Schneidwerk 23 des Maishäckslers 22 verbunden. Die Vorrichtung 1 weist einen separaten Antrieb 24 auf. Der Antrieb 24 ist hier als Hydraulikmotor ausgebildet. Es könnte sich aber auch um einen anderen geeigneten Antrieb 24 handeln. Der Antrieb 24 dient zum Antreiben des Antriebselements 6, an dem die Pflanzenstoppelkreiselschläger 7 befestigt sind, wie dies oberhalb bereits unter Bezugnahme auf die erste Ausführungsform der Vorrichtung 1 beschrieben wurde. Auf diese Ausführungen wird hiermit verwiesen.

Im Unterschied zu der ersten Ausführungsform der Vorrichtung 1 weist diese bei diesem Ausführungsbeispiel einen Gleitteller 25 auf, der sich auf dem Boden des Felds 3 abstützt und über den die Vorrichtung 1 relativ zum Boden geführt ist.

Auch diese Vorrichtung 1 weist eine Höheneinstelleinrichtung 17 zum Einstellen des Abstands der Pflanzenstoppelkreiselschläger 7 vom Boden des Felds 3 auf. In diesem Fall weist die Höheneinstelleinrichtung 17 mehrere auswechselbare Distanzscheiben 26 auf. Durch ein Entfernen von Distanzscheiben 26 und/oder Ersetzen von Distanzscheiben 26 durch Distanzscheiben 26 mit einer anderen Dicke ist der Abstand zwischen dem Gleitteller 25 und den Pflanzenstoppelkreiselschlägern 7 einstellbar, so dass damit die Höhenlage der Pflanzenstoppelkreiselschläger 7 relativ zum Boden des Felds 3 flexibel einstellbar ist.

### BEZUGSZEICHENLISTE

- 1: Pflanzenstoppelzerstörungsvorrichtung
- 2: Pflanzenstoppel
- 3: Feld
- 4: Traktor
- 5: Fahrtrichtung
- 6: Antriebselement
- 7: Pflanzenstoppelkreiselschläger
- 8: Kopplungselement
- 9: erstes Ende
- 10: zweites Ende
- 11: Schlagelement
- 12: Zinkenhalter
- 13: Oberlenker
- 14: Unterlenker
- 15: Träger
- 16: Laufrad
- 17: Höheneinstelleinrichtung
- 18: Bohrung
- 19: Bolzen
- 20: Abstandseinstelleinrichtung
- 21: Bohrung
- 22: Maishäcksler
- 23: Schneidwerk
- 24: Antrieb
- 25: Gleitteller
- 26: Distanzscheibe
- 27: Träger
- 28: Kreiselegge
- 29: kreisringförmiger Arbeitsbereich
- 30: Drehrichtung
- 31: Drehrichtung

## Patentansprüche

1. Pflanzenstoppelzerstörungsvorrichtung (1) zum Zerstören von Pflanzenstoppeln (2) auf einem Feld (3), mit
einer Mehrzahl von beabstandet nebeneinander angeordneten Antriebselementen (6), die zum Bereitstellen einer Rotationsbewegung um jeweils eine vertikale Rotationsachse angetrieben sind, und
einer Mehrzahl von Pflanzenstoppelkreiselschlägern (7), die jeweils ein nicht biegesteifes Kopplungselement (8) mit einem ersten Ende (9) und einem zweiten Ende (10) und ein Schlagelement (11) aufweisen, wobei das erste Ende (9) mit einem der Antriebselemente (6) und das zweite Ende (10) mit dem jeweiligen Schlagelement (11) verbunden ist, wobei
die Antriebselemente (6) so beabstandet und die Längen der Pflanzenstoppelkreiselschläger (7) so bemessen sind, dass sich die kreisringförmigen Arbeitsbereiche (29) der an benachbarten Antriebselementen (6) angeordneten Pflanzenstoppelkreiselschläger (7) überlagern,
die Pflanzenstoppelkreiselschläger (7) an benachbarten Antriebselementen (6) so winkelversetzt angeordnet sind und in entgegengesetzten Drehrichtungen (30, 31) angetrieben werden, dass sie sich nicht gegenseitig berühren,
die Vorrichtung (1) eine Kreiselegge (28) mit einem Zinkenhalter (12) ohne Zinken oder mit gekürzten Zinken ist, und
zwei Pflanzenstoppelkreiselschläger (7) mit ihrem jeweiligen Kopplungselement (8) an dem Zinkenhalter (12) oder den gekürzten Zinken befestigt sind.

2. Vorrichtung (1) nach Anspruch 1, **dadurch gekennzeichnet, dass** die zwei Pflanzenstoppelkreiselschläger (7) um etwa 180° versetzt an dem Antriebselement (6) angeordnet sind.

3. Vorrichtung (1) nach einem der vorhergehenden Ansprüche, **gekennzeichnet durch** eine Aufnahme für die Befestigung der Vorrichtung (1) am Heck eines Traktors (4), wobei das Antriebselement (6) durch die hintere Zapfwelle des Traktors (4) angetrieben wird.

4. Vorrichtung (1) nach mindestens einem der vorhergehenden Ansprüche, **dadurch gekennzeichnet, dass** die Vorrichtung (1) ein mittels eines Trägers (15) mit einem anderen Teil der Vorrichtung (1) verbundenes Laufrad (16) aufweist, das sich auf dem Boden des Felds (3) abstützt und über das die Vorrichtung (1) relativ zum Boden des Felds (3) geführt wird.

5. Vorrichtung (1) nach mindestens einem der vorhergehenden Ansprüche, **gekennzeichnet durch** eine Höheneinstelleinrichtung (17) zum Einstellen des Abstands des Pflanzenstoppelkreiselschlägers (7) vom Boden des Felds (3).

6. Vorrichtung (1) nach Anspruch 5, **dadurch gekennzeichnet, dass** die Höheneinstelleinrichtung (17) so ausgebildet ist, dass die Position des Trägers (15) relativ zu dem anderen Teil der Vorrichtung (1) einstellbar ist.

7. Vorrichtung (1) nach mindestens einem der vorhergehenden Ansprüche, **dadurch gekennzeichnet, dass**
das Schlagelement (11) als Stange, insbesondere als Metallstange, ausgebildet ist, und/oder
das Kopplungselement (8) als Kette, insbesondere als Metallkette, ausgebildet ist.

8. Vorrichtung (1) nach mindestens einem der vorhergehenden Ansprüche, **dadurch gekennzeichnet, dass**
das Schlagelement (11)
eine Masse von mindestens 1 kg, insbesondere mindestens 2 kg, insbesondere zwischen 1 kg und 8 kg, insbesondere von etwa 2 kg besitzt, und/oder
eine Länge von mindestens 200 mm, insbesondere von mindestens 300 mm, insbesondere von mindestens 400 mm, insbesondere zwischen 300 mm und 1200 mm, insbesondere zwischen 400 mm und 600 mm, insbesondere von etwa 500 mm, besitzt, und/oder
eine Dicke von zwischen 20 mm und 50 mm, insbesondere von etwa 30 mm, besitzt; und/oder
das Kopplungselement (8)
eine Länge von mindestens 100 mm, insbesondere von mindestens 200 mm, insbesondere von mindestens 400 mm, insbesondere zwischen 300 mm und 1200 mm, insbesondere zwischen 400 mm und 600 mm, insbesondere von etwa 500 mm, besitzt, und/oder
eine Dicke von zwischen 6 mm und 20 mm, insbesondere zwischen 10 mm und 15 mm insbesondere von etwa 13 mm, besitzt.

9. Vorrichtung (1) nach mindestens einem der vorhergehenden Ansprüche, **dadurch gekennzeichnet, dass** die Pflanzenstoppelkreiselschläger (7) an benachbarten Antriebselementen (6) um etwa 90° versetzt angeordnet sind.

## Claims

1. A plant stubble destroying apparatus (1) for destroying plant stubbles (2) on a field (3), comprising:
a plurality of driving elements (6) being arranged spaced apart and side by side and each being driven about a vertical rotation axis for providing a rotational movement, and
a plurality of plant stubble gyro beaters (7) each including a non-rigid coupling element (8) having a first end (9) and a second end (10) and a beating element (11), the first end (9) being connected to one of the driving elements (6) and the second end (10) being connected to the respective beating element (11), wherein
the driving elements (6) are spaced apart and the lengths of the plant stubble gyro beaters (7) are measured such that the annular working regions (29) of the plant stubble gyro beaters (7) being arranged at adjacent driving elements (6) overlap,
the plant stubble gyro beaters (7) at adjacent driving elements (6) are arranged at an angular offset and are driven in opposite directions of rotation (30, 31) such that they do not contact one another,
the apparatus (1) is a rotary harrow (28) including a tine holder (12) without tines or with shortened tines, and
two plant stubble gyro beaters (7) with their respective coupling element (8) are connected to the tine holder (12) or the shortened tines.

2. The apparatus (1) of claim 1, **characterised in that** the two plant stubble gyro beaters (7) are arranged at the driving element (6) to be offset by approximately 180°.

3. The apparatus (1) of one of the preceding claims, **characterised by** a support for fixing the apparatus (1) to the rear of a tractor (4), the driving element (6) being driven by the rear power take-off of shaft of the tractor (4).

4. The apparatus (1) of one of the preceding claims, **characterised in that** the apparatus (1) includes a wheel (16) being connected to a different part of the apparatus (1) by a carrier (15), the wheel (16) being supported on the ground of the field (3) and guiding the apparatus (1) with respect to the ground of the field (3).

5. The apparatus (1) of one of the preceding claims, **characterised by** a high adjustment unit (17) for adjusting the distance of the plant stubble gyro beater (7) with respect to the ground of the field (3).

6. The apparatus (1) of claim 5, **characterised in that** the high adjustment unit (17) is designed such that the position of the carrier (15) with respect to the other part of the apparatus (1) is adjustable.

7. The apparatus (1) of one of the preceding claims, **characterised in that**
the beating element (11) is designed as a bar, especially a metal bar, and/or
the coupling element (8) is designed as a chain, especially a metal chain.

8. The apparatus (1) of one of the preceding claims, **characterised in that**
the beating element (11)
has a mass of at least 1 kg, especially at least 2 kg, especially between 1 kg and 8 kg, especially of approximately 2 kg, and/or
has a length of at least 200 mm, especially of at least 300 mm, especially of at least 400 mm, especially between 300 mm and 1200 mm, especially between 400 mm and 600 mm, especially of approximately 500 mm, and/or
a thickness of between 20 mm and 50 mm, especially of approximately 30 mm; and/or
the coupling element (8)
has a length of at least 100 mm, especially of at least 200 mm, especially of at least 400 mm, especially between 300 mm and 1200 mm, especially between 400 mm and 600 mm, especially of approximately 500 mm, and/or
a thickness of between 6 mm and 20 mm, especially between 10 mm and 15 mm, especially of approximately 13 mm.

9. The apparatus (1) of one of the preceding claims, **characterised in that** the plant stubble gyro beaters (7) at adjacent driving elements (6) are offset by approximately 90°.

## Revendications

1. Dispositif de destructions de chaumes végétaux (1) pour la destruction de chaumes végétaux (2) sur un champ (3), avec
une pluralité d'éléments d'entraînement (6) disposés à une certaine distances les uns des autres, qui sont entraînés chacun autour d'un axe de rotation verticale afin de produire un mouvement de rotation, et
une pluralité de battoirs rotatifs pour chaumes végétaux (7), qui comprennent chacun un élément de couplage non rigide (8) avec une première extrémité (9) et une deuxième extrémité (10) et un élément de battage (11), la première extrémité (9) étant reliée avec un des éléments d'entraînement (6) et la deuxième extrémité (10) étant reliée avec l'élément de battage (11) correspondant,
les éléments d'entraînement (6) étant écartés et les longueurs des battoirs rotatifs pour chaumes végétaux (7) étant dimensionnés de façon à ce que les zones de travail annulaires (29) des battoirs rotatifs pour chaumes végétaux (7) disposés sur des éléments d'entraînement (6) adjacents se superposent,
les battoirs rotatifs pour chaumes végétaux (7) étant décalés de manière angulaire sur les éléments d'entraînement adjacents (6) et étant entraînés dans des sens de rotation (30, 31) opposés, de façon à ce qu'ils ne se trouvent pas entre eux,
le dispositif (1) étant une herse rotative (28) avec un support de lames (12) sans lames ou avec des lames raccourcies et
deux battoirs rotatifs pour chaumes végétaux (7) étant fixés, avec leur élément de couplage (8) correspondant, au support de lames (12) ou aux lames raccourcies.

2. Dispositif (1) selon la revendication 1, **caractérisé en ce que** les deux battoirs rotatifs pour chaumes végétaux (7) sont disposés de manière décalée d'environ 180° sur l'élément d'entraînement (6).

3. Dispositif (1) selon l'une des revendications précédentes, **caractérisé par** un logement pour la fixation du dispositif (1) à l'arrière d'un tracteur (4), l'élément d'entraînement (6) étant entraînée par l'arbre de prise de force arrière du tracteur (4).

4. Dispositif (1) selon au moins l'une des revendications précédentes, **caractérisé en ce que** le dispositif (1) comprend une roue (16) reliée au moyen d'un support (15) avec une autre partie du dispositif (1), qui s'appuie sur le sol du champ (3) et par l'intermédiaire de laquelle le dispositif (1) est guidé par rapport au sol du champ (3).

5. Dispositif (1) selon au moins l'une des revendications précédentes, **caractérisé par** un dispositif de réglage en hauteur (17) pour le réglage de la distance entre le battoir rotatif pour chaumes végétaux (7) et le sol du champ (3).

6. Dispositif (1) selon la revendication 5, **caractérisé en ce que** le dispositif de réglage en hauteur (17) est conçu de façon à ce que la position du support (15) soit réglage par rapport à l'autre partie du dispositif (1).

7. Dispositif (1) selon au moins l'une des revendications précédentes, **caractérisé en ce que**
l'élément de battage (11) est conçu comme une tige, plus particulièrement comme une tige métallique et/ou
l'élément de couplage (8) est conçu comme une chaîne, plus particulièrement comme une chaîne métallique.

8. Dispositif (1) selon au moins l'une des revendications précédentes, **caractérisé en ce que** l'élément de battage (11)
présente une masse d'au moins 1 kg, plus particulièrement d'au moins 2 kg, plus particulièrement entre 1 kg et 8 kg, plus particulièrement d'environ 2 kg et/ou
présente une longueur d'au moins 200 mm, plus particulièrement d'au moins 300 mm, plus particulièrement d'au moins 400 mm, plus particulièrement entre 300 mm et 1200 mm, plus particulièrement entre 400 mm et 600 mm, plus particulièrement d'environ 500 mm et/ou
présente une épaisseur entre 20 mm et 50 mm, plus particulièrement d'environ 30 mm ; et/ou
l'élément de couplage (8)
présente une longueur d'au moins 100 mm, plus particulièrement d'au moins 200 mm, plus particulièrement d'au moins 400 mm, plus particulièrement entre 300 mm et 1200 mm, plus particulièrement entre 400 mm et 600 mm, plus particulièrement d'environ 500 mm et/ou
présente une épaisseur entre 6 mm et 20 mm, plus particulièrement entre 10 mm et 15 mm, plus particulièrement d'environ 13 mm.

9. Dispositif (1) selon au moins l'une des revendications précédentes, **caractérisé en ce que** les battoirs rotatifs pour chaumes végétaux (7) sont disposés de manière décalée d'environ 90° sur des éléments d'entraînement (6) adjacents.
